# EUROPEAN PATENT SPECIFICATION

(11) **EP 1 642 707 B1**
(45) Date of publication and mention of the grant of the patent: **17.12.2008**
(21) Application number: 05256026.5
(22) Date of filing: 27.09.2005
(51) Int. Cl.: B32B 27/18, B65D 65/40, C08K 3/40

(54) **Packaging laminates containing anti-block particles**
Verpackungsschichtstoff mit Antiblockteilchen
Stratifié d'emballage contenant des agents améliorant le glissement

(30) Priority: 29.09.2004 US 953987
(43) Date of publication of application: 05.04.2006
(73) Proprietor: CURWOOD, INC., Oshkosh, Wisconsin 54904 (US)
(72) Inventor: Nelson, Kevin P., Appleton, WI 54914 (US); Harvey, Christopher J., Appleton, WI 54115 (US); Schell, Andrea M., Winneconne, WI 54986 (US); Bellile, Richard R., Greenville, WI 54942 (US)
(74) Representative: W.P. Thompson & Co.

(56) References cited:
- EP-A- 0 514 128
- EP-A- 0 795 574
- EP-A- 0 826 491
- DE-A1- 19 720 313

## Description

### FIELD OF THE INVENTION

The present invention generally relates to flexible packaging laminates, and particularly, to packaging laminates comprising anti-block additives which impart improved machinability, i.e., minimal film-to-film blocking and/or reduced coefficient of friction to the resulting laminate. The present invention also relates to flexible heat-sealable laminates suitable for use on form-fill-seal packaging machines.

### BACKGROUND OF THE INVENTION

Flexible packaging materials useful for form-fill-seal packaging (FFS) applications are known by those skilled in the art. Anti-blocks are often added to these films to prevent film-to-film blocking or sticking of the film to itself during storage and/or high speed packaging operations. Blocking is the adhesion between adjacent layers of film and may arise during processing, use and/or storage of a packaging film. Blocking makes it difficult to open the film tube for films produced by an annular process. Blocking often occurs in tightly wound rolls of film; and re-blocking occurs when sheets are stacked under some pressure and/or heat. Often, blocking and/or re-blocking between sheets of tightly wound rolls of film will reduce packaging speeds and increase operator intervention. It is known by those skilled in the art that films having a very smooth and glossy surface are more sensitive and more prone to blocking effects. Generally, an increase in the film's surface smoothness will cause a higher adhesion between film layers or coefficient of friction (COF). For this reason, manufacturers of packaging materials often incorporated anti-block additives into the sealant layer (exterior film layer) composition and/or added anti-block additives to the sealant layer surface of packaging films to lower the coefficient of friction between adjacent sheets of film. Typically, anti-block additive in the sealant layer will protrude from the film surface immediately after solidification of the extruded film, roughening the film surface and reducing or eliminating blocking between film surfaces. In general, reducing or eliminating blocking and thus improving film machinability, allows for higher throughput during the packaging process without jamming the equipment.

It is well known by those skilled in the packaging industry that film lamination can be used to make composite construction, i.e., for example, combining the sealing characteristics of one material with the machinability of another material. Generally, the lamination process involves applying heat and/or pressure to at least two substrates to promote adhesion between materials. This process includes heating one or more of the substrates to a temperature which will cause the substrate to soften, and simultaneously or subsequently, applying pressure between the substrates to promote adhesion between the materials. Typically, the pressure exerted on the materials may force anti-block particles which are present at the outer surface below the surface of the substrates. The resulting laminate will not exhibit low COF values and/or anti-blocking characteristics needed for further packaging operations.

Thus, despite the difficulties associated with producing laminates with anti-blocking properties, there remains a need for flexible packaging films having improved anti-blocking properties and low coefficients of friction produced by lamination methods.

EP0795574 discloses two or more layer coextruded films consisting of polyethylene, polypropylene, polyethylene copolymers or a mixture thereof in which one of the outer layers contains inorganic or organic particles with a maximum particle diameter greater than the thickness of that layer and an average particle diameter greater than 10 microns, which are also treated with a lubricant.

EP0514128 discloses a polymeric film comprising an essentially unfilled primary layer substrate and a filled secondary layer. The filler is glass particles having a volume distributed median particle diameter of 1 to 7µm, which are present in the secondary layer at a concentration of 100 to 1,000 ppm.

EP0826491 discloses a film including a first outer layer comprising a polymeric material; a second outer layer including a polymeric material; and a substrate layer disposed between the first and second outer layers. The substrate layer includes a polymer and an anti-blocking agent.

### SUMMARY OF THE INVENTION

The present invention provides a flexible laminate suitable for use in packaging applications comprising:
a) a thermoplastic first substrate having a first exterior surface and an opposing second exterior surface, and a total thickness of A; wherein said thermoplastic first substrate comprises at least a first polymeric layer comprising a heat-sealable resin or blends thereof; and
b) a second substrate comprising at least a first layer;
wherein said thermoplastic first substrate is laminated to said first layer of said second substrate; and
i) said first polymeric layer of said thermoplastic first substrate comprises a plurality of anti-block particles comprising glass spheres and/or ceramic spheres dispersed therein in an amount of between 0.1 and 30% (wt.) relative to the total weight of said first polymeric layer; wherein a portion of said plurality of anti-block particles have a diameter that is at least equal to or greater than said total thickness of said thermoplastic first substrate and are present in an amount such that a portion of said plurality of anti-block particles protrudes from said first exterior surface of said thermoplastic first substrate;
ii) said plurality of anti-block particles have a mean particle diameter B, and a distribution of particle diameters C, such that either B, or at least 10% of C, is at least 31µm (microns) as measured in accordance with ASTM D-4464 test method; and
iii) said total thickness A, said mean particle diameter B, and said at least 10% of said distribution of particle diameters C, are such that the relative values of A, B and C satisfy at least one of the following relationships A/B ≤ 1.0 or A/C ≤ 1.0.

Preferably, the at least first polymeric layer may comprise any heat-sealable resin or blends thereof. Preferably, the at least first polymeric layer may include a heat-sealable resin selected from the group comprising polyolefin-based resins, ethylene acrylate-based resins, acrylic acid-based resins, polystyrenes and the like. The polyolefin-based resins may include any polyolefin-based resins, preferably, a polyolefin-based resin selected from the group consisting of polyvinylidene chloride (PVDC), polyethylene (PE), polypropylene (PP), polybutylene (PB), ionomer (IO), ethylene/α-olefin copolymers (E/AO), propylene/α-olefin copolymers (P/AO), and blends thereof. The acrylate-based resin may include any acrylate-based resin, preferably, an acrylate-based resin selected from the group consisting of methyl/methacrylate copolymer (M/MA), ethylene/vinyl acrylate copolymer (E/VA), ethylene/methacrylate copolymer (E/MA), ethylene/n-butyl acrylate copolymer (E/nBA), or blends thereof. The acrylic acid-based resin may comprise any acrylic acid-based resin, preferably, an acrylic acid-based resin selected from the group consisting of ethylene/acrylic acid copolymer (E/AA), ethylene/methacrylic acid copolymer (E/MAA), or blends thereof.

Preferably, the thermoplastic first substrate has a haze value of less than 50 as measured in accordance with ASTM D-1003 test method.

Preferably, the first exterior surface of the thermoplastic first substrate comprises a heat-sealable material.

Preferably, the mean particle diameter of the plurality of anti-block particles has a range of between 31-350 µm (microns).

Preferably, a plurality of anti-block particles are present in the at least first polymeric layer of the thermoplastic first substrate in an amount of between 0.1-30% (wt.) relative to the total weight of the first polymeric layer.

Preferably, a plurality of anti-block particles are present in the at least first polymeric layer of the thermoplastic first substrate in an amount of between 0.1-10% (wt.) relative to the total weight of the first polymeric layer.

Preferably, the plurality of anti-block particles present in the at least first polymeric layer of the thermoplastic first substrate may have a spherical shape.

Preferably, the thermoplastic first substrate has a haze value of less than 50 as measured in accordance with ASTM D-1003 test method.

Accordingly, the shortcomings of producing anti-blocking laminates are overcome by providing a flexible laminate having a thermoplastic first substrate adhered to a second substrate having at least a first layer. The first layer of the second substrate may include one or more materials selected from the group consisting of paper, metal, ceramic, and polymers, such as, polyolefin-based resin, polyamide and polyester, and combinations thereof. Suitable metals may comprise at least one member selected from the group consisting of metallic foils, metallic coatings, metallic oxide coatings, and the like. Suitable polyolefin-based resins may comprise any polyolefin-based resins, preferably, an oriented polyolefin-based resin. Suitable polyamides may include any polyamide resins, preferably, an oriented polyamide reins. Suitable polyesters may comprise any polyester, preferably, an oriented polyester resin.

In accordance with the present invention, the second substrate may comprise at least a first layer and may further include additional layers. The second substrate may comprise a polymeric second layer comprising any thermoplastic material, preferably, a thermoplastic material selected from the group consisting of a polyolefin-based resin, a acrylate-based resin, an acrylic acid-based resin, and combinations thereof.

In accordance with the present invention, the second substrate may comprise a first layer, a polymeric second layer, and may include a polymeric third layer. The second substrate may comprise a polymeric third layer comprising any thermoplastic material, preferably, a thermoplastic material selected from the group consisting of a polyolefin-based resin, a acrylate-based resin, an acrylic acid-based resin, and combinations thereof.

In accordance with the present invention, the second substrate may comprise a first layer, a polymeric second layer, a polymeric third layer, and may include a polymeric fourth layer. The second substrate may comprise a polymeric fourth layer comprising any thermoplastic material, preferably, a thermoplastic material selected from the group consisting of a paper, polyolefin-based resin, a acrylate-based resin, an acrylic acid-based resin, a polyamide, a polyester and combinations thereof.

Preferably, the polymeric fourth layer of the second substrate may comprise an oriented polyolefm-based resin.

Preferably, the polymeric fourth layer of the second substrate may comprise an oriented polyamide.

Preferably, the polymeric fourth layer of the second substrate may comprise an oriented polyester.

Preferably, the second substrate may include a first layer, a polymeric second layer, and a polymeric third layer, such that the polymeric second layer is disposed between the first layer and the polymeric third layer and the first layer of the second substrate may be in direct with the first polymeric layer of the thermoplastic first substrate.

Preferably, the second substrate includes a first layer, a polymeric second layer, a polymeric third layer, and a polymeric fourth layer, such that the third layer is positioned between the polymeric second layer and the polymeric fourth layer, and the first layer of the second substrate may be in direct with the first polymeric layer of the thermoplastic first substrate.

Preferably, the second substrate is free of anti-block particles having a mean particle diameter of 31 microns as measured in accordance ASTM D-4464 test method.

Preferably, the flexible laminates of the present invention have a coefficient of friction of between 0.05-0.6 as measured in accordance with ASTM D-1894 test method.

Preferably, the flexible laminates of the present invention have a coefficient of friction of between 0.1-0.4 as measured in accordance with ASTM D-1894 test method.

### BRIEF DESCRIPTION OF THE DRAWINGS

**FIG**. **1** is a partially schematic, cross-sectional view of one embodiment of a flexible laminate according to the present invention comprising a thermoplastic first substrate and a second substrate.

**FIG. 2** is a partially schematic, cross-sectional view of another embodiment of a flexible laminate according to the present invention comprising a thermoplastic first substrate having a first polymeric layer containing anti-block particles and a second substrate comprising four layers.

**FIG. 3** is a partially schematic, cross-sectional view of still another embodiment of a flexible laminate according to the present invention comprising a two-layer thermoplastic first substrate and a second substrate comprising four layers.

### DETAILED DESCRIPTION OF THE INVENTION

As used herein, the term "laminate" when used as a noun, refer to the resulting product made by bonding together two or more substrates, layers or other materials. "Laminate" when used as a verb, means to affix or adhere (by means of, for example, extrusion coating, adhesive bonding, pressure and heat bonding, corona lamination, and the like) two or more separately made articles to one another so as to form a multilayer or multi-substrate structure. Conventional lamination methods used in flexible packaging are discussed in detail in Bowler, John F., "Guide to Laminations" in Modern Packaging Encyclopedia, Volume 42, Number 7A, McGraw-Hill, page 186, (1969).

As used herein, the phrase "anti-block particles" refers to additives that are incorporated into a film, substrate or layer composition to prevent the surface of a film from sticking to itself or other surfaces. When incorporated into a film or substrate composition, anti-block particles affect the final surface topography of an exterior surface of the film, substrate or laminate. Anti-block particles may be organic or inorganic in nature. Typical inorganic anti-block particles that may be suitable in the present invention include types of glass, e.g., soda-lime-borosilicate glass, and various ceramics, *i.e*., for example, silica-alumina ceramic and alkali alumino silicate ceramic (" Zeeospheres™" available from 3M). It will be appreciated that the anti-block particle may be either a hollow or solid form.

As used herein, the phrase "thermoplastic" refers to a polymer or polymer mixture that softens when exposed to heat and returns to its original condition when cooled to room temperature. In general, thermoplastic materials include, but are not limited too, synthetic polymers such as polyamides, polyolefin-based resins, acrylate-based resins, acrylic acid-based resins, polyesters, polystyrenes, and the like. Thermoplastic materials may also include any synthetic polymer that are cross-linked by either radiation or chemical reaction during a manufacturing or post-manufacturing process operation.

As used herein, the term "polymeric" refers to a material which is the product of a polymerization reaction of natural, synthetic, or natural and synthetic ingredients, and is inclusive of homopolymers, copolymers, terpolymers, etc. In general, the layers of a film or substrate may comprise a single polymer, a mixture of a single polymer and non-polymeric materials, a combination of two or more polymeric materials blended together, or a mixture of a blend of two or more polymeric materials and non-polymeric materials.

As used herein, the term,"copolymer" refers to polymers formed by the polymerization of reaction of at least two different monomers. For example, the term "copolymer" includes the co-polymerization reaction product of ethylene and an α-olefin, such as 1-hexene. The term "copolymer" is also inclusive of, for example, the co-polymerization of a mixture of ethylene, propylene, 1-butene, 1-hexene, and 1-octene. As used herein, a copolymer identified in terms of a plurality of monomers, *e.g*., "propylene/ethylene copolymer", refers to a copolymer in which either monomer may copolymerize in a higher weight or molar percent than the other monomer or monomers. However, the first listed monomer preferably polymerizes in a higher weight percent than the second listed monomer.

As used herein, the phrases "heat-sealable" and "heat-sealable resin" refer to any polymeric material, resins, films which are heat sealable to itself or to another like material. Heat-sealable resins or films are capable of fusion bonding by conventional indirect heating means which generate sufficient heat on at least one film contact surface for conduction to the contiguous film contact surface and formation of a bond interface therebetween without loss of the film integrity. Advantageously, the bond interface must be sufficiently thermally stable to prevent gas or liquid leakage therethrough. Suitable examples of heat-sealable materials include, but are not limited to, polyolefin-based resins, including polyethylenes, ethylene/α-olefin copolymers, ionomers, and the like, acrylate-based resins, acrylic acid-based resins.

As used herein, terminology employing a "/" with respect to the chemical identity of a copolymer (*e.g*., polyvinylidene chloride/methyl acrylate copolymer), identifies the comonomers which are copolymerized to produce the copolymer.

As used herein, the phrases "extrusion coating" and "extrusion coated" refer to the lamination process in which a molten substance is extruded and pressed onto or into the surface of a solid object or material, *i.e.,* polymeric substrate, paperboard, metallic foil, adhering to and coating the surface. In this process, the molten substance, *i.e.,* a first polymeric film or coating, is deposited onto a moving solid second polymeric film or substrate in a nip created by a rubber pressure roll and a chrome-plated steel chill roll. The first polymeric film and second polymeric film are squeezed together by a rubber pressure roll and a chrome-plated steel chill roll to produce adhesion between the two films or substrates. Extrusion coating methods used in flexible packaging are discussed in detail in Alsdorf, Michael G., "Extrusion Coating" in Modern Packaging Encyclopedia , Volume 42, Number 7A, McGraw-Hill, pp. 289-293, (1969).

Unless otherwise noted, the resins utilized in the present invention are generally commercially available in pellet form and, as generally recognized in the art, may be melt blended or mechanically mixed by well-known methods using commercially available equipment including tumblers, mixers or blenders. Also, if desired, well known additives such as processing aids, slip agents, and pigments, and mixtures thereof may be incorporated into the film, by blending prior to extrusion. The resins and any additives are introduced to an extruder where the resins are melt plastified by heating and then transferred to an extrusion (or coextrusion) die for formation into a film. Extruder and die temperatures will generally depend upon the particular resin or resin containing mixtures being processed and suitable temperature ranges for commercially available resins are generally known in the art, or are provided in technical bulletins made available by resin manufacturers. Processing temperatures may vary depending upon other processing parameters chosen.

As used herein, the term "oriented" refers to a thermoplastic web which forms a film structure in which the web has been elongated in either one direction ("uniaxial") or two directions ("biaxial") at elevated temperatures followed by being "set" in the elongated configuration by cooling the material while substantially retaining the elongated dimensions. This combination of elongation at elevated temperature followed by cooling causes an alignment of the polymer chains to a more parallel configuration, thereby improving the mechanical properties of the polymer web. Upon subsequently heating of certain unrestrained, unannealed, oriented sheet of polymer to its orientation temperature, heat-shrinkage may be produced. Following orientation, the oriented polymer web is preferably cooled and then heated to an elevated temperature, most preferably to an elevated temperature which is above the glass transition temperature and below the crystalline melting point of the polymer. This reheating step, which may be referred to as annealing or heat setting, is performed in order to provide a polymer web of uniform flat width. In accordance with the present invention, the uniaxially- or biaxially-oriented polymer web may be used to form a substrate layer and is heated to an elevated temperature in order to provide a laminate substrate with an unrestrained linear thermal shrinkage in the machine direction of between 0-10 %, and preferably, 0-5% at 85° C. as measured in accordance with ASTM D-2732-96 test method.

As used herein, the phrase "polyolefin-based resin" refers to homopolymers, copolymers, including *e.g.* bipolymers, terpolymers, block copolymer, grafted copolymers, *etc.*, having a methylene linkage between monomer units which may be formed by any method known to those skill in the art. Examples of polyolefins include polyvinylidene chloride (PVDC), ethylene/vinyl alcohol (E/VOH), ethylene/vinyl acetate (E/VA), polyethylene (PE) which include, but are not limited to, low-density polyethylene (LDPE), linear low-density polyethylene (LLDPE), very low-density polyethylene (VLDPE), ultra low-density polyethylene (ULDPE), medium-density polyethylene (MDPE), high-density polyethylene (HDPE), ultra high-density polyethylene (UHDPE), and polyethylenes comprising ethylene/α-olefin (E/AO) which are copolymers of ethylene with one or more α-olefins (alpha-olefins) such as butene-1, hexene-1, octene-1, or the like as a comonomer, and the like. Other examples of polyolefins include ethylene/propylene copolymers (PEP), polypropylene (PP), propylene/ethylene copolymer (PPE), polyisoprene, polybutylene (PB), polybutene-1, poly-3-methylbutene-1, poly-4-methylpentene-1, ionomers (10), and propylenel/α-olefins (P/AO) which are copolymers of propylene with one or more α-olefins (alpha-olefins) such as butene-1, hexene-1, octene-1, or the like as a comonomer, and the like.

As used herein, the phrase "ethylene/α-olefin" (E/AO) refers to a modified or unmodified copolymer produced by the co-polymerization of ethylene and any one or more α-olefin. The α-olefin in the present invention may have between 3-20 pendant carbon atoms. The co-polymerization of ethylene and an α-olefin may be produced by heterogeneous catalysis, *i.e.,* co-polymerization reactions with Ziegler-Natta catalysis systems, for example, metal halides activated by an organometallic catalyst, *i.e.,* titanium chloride, optionally containing magnesium chloride, complexed to trialkyl aluminum and maybe found in patents such as U.S. Patent No. 4,302,565 to Goeke, *et al.* and U.S. Patent No. 4,302,566 to Karol*, et al.,* Heterogeneous catalyzed copolymers of ethylene and an α-olefin may include linear low-density polyethylene, very low-density polyethylene and ultra low-density polyethylene. These copolymers of this type are available from, for example, The Dow Chemical Company, of Midland, MI., U.S.A. and sold under the trademark DOWLEX™ resins. Additionally, the co-polymerization of ethylene and a α-olefin may also be produced by homogeneous catalysis, for example, co-polymerization reactions with metallocene catalysis systems which include constrained geometry catalysts, *i.e.,* monocyclopentadienyl transition-metal complexes taught in U.S. Pat. No. 5,026,798, to Canich. Homogeneous catalyzed ethylene/α-olefin copolymers (E/AO) may include modified or unmodified ethylene/α-olefin copolymers having a long-chain branched (for example, 8-20 pendant carbons atoms) α-olefin comonomer available from The Dow Chemical Company, known as AFFINITY™ and TAFMER™ linear copolymers obtainable from the Mitsui Petrochemical Corporation of Tokyo, Japan and modified or unmodified ethylene/α-olefin copolymers having a short-chain branched (for example, 3-6 pendant carbons atoms) α-olefin comonomer known as EXACT^{TM} resins obtainable from ExxonMobil Chemical Company of Houston, TX, U.S.A.

As used herein, the term "ionomer" refers to metal-salt, *e.g.,* sodium or zinc, neutralized ethylene/acrylic acid or ethylene/methacrylic acid copolymers. Examples of ionomers are sold under the trademark SURLYN® from E.I. de Pont de Nemours and Company, Wilmington, Delaware, U.S.A.

As used herein, the term "polyester" refers to homopolymers or copolymers having an ester linkage between monomer units which may be formed, for example, by condensation polymerization reactions between a dicarboxylic acid and a glycol. The ester monomer unit can be represented by the general formula: [RCO₂R'] where R and R' = alkyl group. The dicarboxylic acid may be linear or aliphatic, i.e., oxalic acid, malonic acid, succinic acid, glutaric acid, adipic acid, pimelic acid, suberic acid, azelaic acid, sebacic acid, and the like; or may be aromatic or alkyl substituted aromatic, *i.e.,* various isomers of phthalic acid, such as paraphthalic acid (or terephthalic acid), isophthalic acid and naphthalic acid. Specific examples of alkyl substituted aromatic acids include the various isomers of dimethylphthalic acid, such as dimethylisophthalic acid, dimethylorthophthalic acid, dimethylterephthalic acid, the various isomers of diethylphthalic acid, such as diethylisophthalic acid, diethylorthophthalic acid, the various isomers of dimethylnaphthalic acid, such as 2,6-dimethylnaphthalic acid and 2,5-dimethylnaphthalic acid, and the various isomers of diethylnaphthalic acid. The glycols may be straight-chained or branched. Specific examples include ethylene glycol, propylene glycol, trimethylene glycol, 1,4-butane diol, neopentyl glycol and the like. An example of a preferred polyester is polyethylene terephthalate and more preferable, biaxially-oriented polyethylene terephthalate.

As used herein, the phrase "acrylate-based resin" refers to homopolymers and copolymers having an ester of acrylic acid linkage between monomer unit. The acrylic acid monomer unit can be represented by the general formula: [H₂C-C](R)(CO₂R') where R= H, alkyl group and R'= same or different alkyl group as R. Acrylate-based resins may be formed by any method known to those skill in the art, such as, for example, polymerization of the acrylate monomer by the same methods as those described for acrylic acid-based resins. Examples of these materials include, but are not limited to, methyl/methacrylate copolymer (MMA), ethylene/vinyl acrylate copolymer (EVA), ethylene/methacrylate copolymer (EMA), ethylene/n-butyl acrylate copolymer (EnBA), and blends thereof. An example of a preferred acrylate-based resin is ethylene/vinyl acrylate copolymer.

As used herein, the phrase "acrylic acid-based resin" refers to homopolymers and copolymers having an acrylic acid and/or a methacrylic acid linkage between monomer unit. These monomer units have the general formula: [H₂C-C](R)(CO₂H) where R= H, alkyl group. Acrylic acid-based resins may be formed by any method known to those skill in the art and may include polymerization of acrylic acid, or methacrylic acid in the presence of light, heat, or catalysts such as benzoyl peroxides, or by the esters of these acids, followed by saponification. Examples of acrylic acid-based resins include, but are not limited to, ethylene/acrylic acid copolymer (E/AA), ethylene/methacrylic acid copolymer (E/MAA), and blends thereof. An example of a preferred acrylic acid-based resins is ethylene/acrylic acid copolymer (E/AA).

As used herein, the term "polyamide" refers to homopolymers, copolymers, or terpolymers having an amide linkage between monomer units which may be formed by any method known to those skill in the art. The nylon monomer can be presented by the general formula: [CONH] or [CONR], where R = alkyl group. Useful polyamide homopolymers include nylon 6 (polycaprolactam), nylon 11 (polyundecanolactam), nylon 12 (polylauryllactam), and the like. Other useful polyamide homopolymers also include nylon 4,2 (polytetramethylene ethylenediamide), nylon 4,6 (polytetramethylene adipamide), nylon 6,6 (polyhexamethylene adipamide), nylon 6,9 (polyhexamethylene azelamide), nylon 6,10 (polyhexamethylene sebacamide), nylon 6,12 (polyhexamethylene dodecanediamide), nylon 7,7 (polyheptamethylene pimelamide), nylon 8,8 (polyoctamethylene suberamide), nylon 9,9 (polynonamethylene azelamide), nylon 10,9 (polydecamethylene azelamide), nylon 12,12 (polydodecamethylene dodecanediamide), and the like. Useful polyamide copolymers include nylon 6,6/6 copolymer (polyhexamethylene adipamide/caprolactam copolymer), nylon 6/6,6 copolymer (polycaprolactam/hexamethylene adipamide copolymer), nylon 6,2/6,2 copolymer (polyhexamethylene ethylenediamide/hexamethylene ethylenediamide copolymer), nylon 6,6/6,9/6 copolymer (polyhexamethylene adipamide/hexamethylene azelaiamide/caprolactam copolymer), as well as other nylons which are not particularly delineated here. Examples of preferred polyamides include any biaxially-oriented polyamide.

As used herein, the term "polystyrene" refers to homopolymers and copolymers having at least one styrene monomer linkage within the repeating backbone of the polymer. The styrene linkage can be represented by the general formula: [(C₆R₅)CH₂CH₂) where R = H or an alkyl group. Polystyrene may be formed by any method known to those skill in the art. Suitable polystyrene resins include, for example, but are not limited to, polystyrene (PS), oriented polystyrene (OPS), syndiotactic polystyrene (SPS), acrylonitrile-butadienestyrene (ABS), styrene-acrylonitrile (SAN), ethylene/styrene copolymers, styrene/acrylic copolymers, styrene block copolymers (SBC), and the like.

As used herein, the phrases "exterior layer" and "outer layer" refer to the any substrate layer having less than two of its principal surfaces directly adhered to another layer of the substrate or another substrate.

As used herein, the terms "joins" and "adheres" are used in their broad sense to mean two formerly separate portions of a single laminate or one or two layers of a substrate which are connected together either by folding the laminate or layer onto its self thereby defining an edge or by bonding two layers together (presumably, their entire planar surfaces) with an adhesive or by other means known to those skilled in the art.

As used herein, the phrase "coefficient of friction" refers to the resistance which a film, substrate or laminate meets with from the surface on which it moves. The coefficient of friction may include resistance to sliding motion or to rolling motion and can be determined in accordance with ASTM D-1894 test method, which is incorporated herein, by reference.

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete and will fully convey the scope of the invention to those skilled in the art. Like numbers refer to like elements throughout.

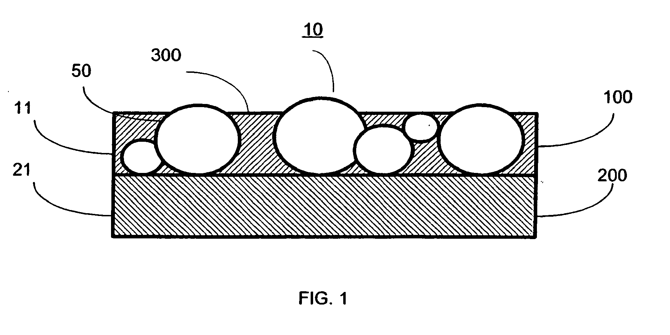

Referring to FIG. 1, laminate **10** is cross-sectional view of one embodiment of a flexible laminate according to the present invention comprising a thermoplastic first substrate **100** and a second substrate **200.** As depicted, thermoplastic first substrate **100** includes a first exterior surface **300** and at least a first polymeric layer **11** having a plurality of anti-block particles **50** dispersed therein. First polymeric layer **11** is a heat-sealable layer. As depicted, first exterior surface **300** is formed from a first polymeric layer **11** of the thermoplastic first substrate. Second substrate **200,** as shown, comprises at least a first layer **21** which is directly adhered to thermoplastic first substrate **100.** Both thermoplastic first substrate **100** and a second substrate **200** may each include additional layers if so desired. It will be appreciated that a portion of the anti-block particles **50** protrudes from the first exterior surface **300** when a portion of the plurality of anti-block particles **50** in thermoplastic first substrate **100** has diameter equal to or greater than the total thickness of first substrate **100.** It may be further appreciated that the plurality of anti-block particles **50** has a mean particle diameter and a distribution of particle diameters such that either the mean particle diameter or at least 10% of the distribution of particle diameters is at least 31 microns.

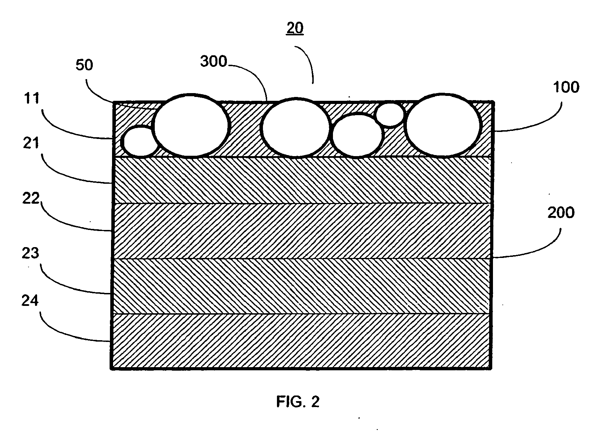

FIG. 2 represents a cross-sectional view of another embodiment of a flexible laminate according to the present invention comprising a thermoplastic first substrate **100** having a first exterior surface **300,** a first polymeric layer **11** comprising anti-block particles **50,** and a second substrate **200** having a first layer **21,** a polymeric second layer **22,** a polymeric third layer **23,** and a polymeric fourth layer **24.**

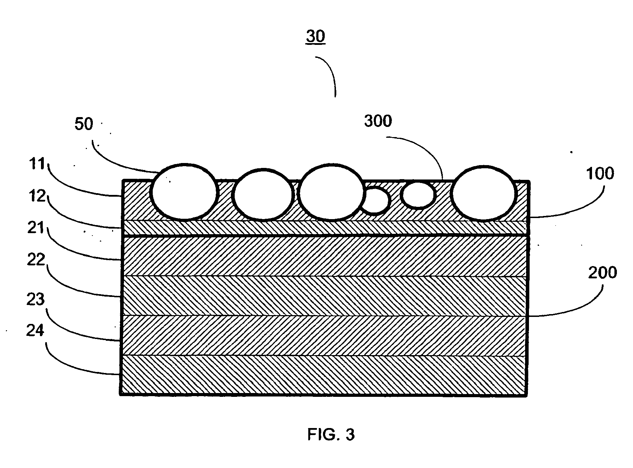

Now turning to FIG. 3, the diagram represents a cross-sectional view of still another embodiment of a flexible laminate according to the present invention comprising a thermoplastic first substrate **100** having an exterior surface **300,** a first polymeric layer **11** comprising anti-block particles **50,** and a second polymeric layer **12,** and a second substrate having a first layer **21,** a polymeric second layer **22,** a polymeric third layer **23,** and a polymeric fourth layer **24.** Thermoplastic first substrate **100** comprises a first polymeric layer **11** and a second polymeric layer **12,** and is laminated to second substrate **200.** It will be appreciated that a portion of the anti-block particles **50** protrudes from first exterior surface **300** of thermoplastic first substrate **100.**

### EXAMPLES

The invention is illustrated by the following examples, which are provided for the purpose of representation, and are not to be construed as limiting the scope of the invention. Unless stated otherwise, all percentages disclosed herein are based on weight.

The following resins and materials were employed in the Examples set forth below.

E/VA: Elvax® 3176 ethylene/vinyl acetate copolymer having a density of 0.94 g/cm³, a melt index of 30 g/10 min., a Vicat softening point of 54° C., a melting point of 84° C., which is available from E.I. duPont de Nemours and Company, Wilmington, DE, U.S.A.

PE1: Polyethylene 4012 having a density of 0.918 g/cm³, a melt index of 12 g/10 min., a Vicat softening point of 89° C., a melting point of 107 ° C., which is available from The Dow Chemical Company, Midland, MI, U.S.A.

PE2: Petrothene® NA 216-000 having a density of 0.923 g/cm³, a melt index of 3.7 g/10 min., a Vicat softening point of 92° C., which is available from Equistar Chemical, LP, Houston, TX, U.S.A.

OPP: B523 is a transparent biaxially oriented polypropylene film having a thickness of 48 gauge (12 micron) which is available from Applied Extrusion Technologies, Inc., New Castle, DE, U.S.A. 7.1 µm

Metal: 1145 is an aluminum foil having a thickness of 7.1 µm (28.5 gauge) 7.1 µm (7.1 micron) which is available from Norandal USA, Newport, AR, U.S.A.

PVDC: Serfene® 2010 is a polyvinylidene chloride latex coating available from Rohm and Haas Company, Philadelphia, PA, U.S.A.

E/AA: Primacor® 3440 is an ethylene/acrylic acid copolymer having a density of 0.938 g/cm³, a melt index of 10.5 g/10 min., a Vicat softening point of 81° C., a melting point of 98 °C., which is available from The Dow Chemical Company, Midland, MI, U.S.A.

OPET: Skyrol SP65 is one-sided corona treated transparent biaxially oriented polyethylene terephthalate film having a thickness of 1.12 µm (48 gauge) (12 micron), having a tensile strength (machine direction/transverse direction) of 25/28 Kg/mm², which is available from SKC, Inc., Covington, GA, U.S.A.

AB1: 3M Scotchlite™ S22 are hollow soda-lime glass spheres having a density of 0.22 g/cm³, an average particle size of 35 µm (microns) which are available from 3M, St. Paul, MN, U.S.A.

AB2: Spheriglass® A Glass 3000 are solid soda-lime glass spheres having an average particle size of 35 µm (microns) which are available from Potters Industries, Inc., Valley Forge, PA, U.S.A.

For the following examples, a first substrate having a first polymeric layer comprising EVA with and without anti-block particles was produced. A second substrate was made by coating one side of OPP film with a latex mixture of PVDC, and then, extrusion laminated to OPET and PE2. The first substrate was then extrusion coated onto the second substrate to form a laminate.

A single slash, "/", represents the division between individual layers within a substrate, whereas a double slash, "//", represents the division between individual substrates.

### Comparative Example 1

A laminate having a first and second substrate with the following structures, layer thicknesses and layer composition were produced:

34 g/m² (21 lb./ream) (100% EVA) // 11.3 g/m² (6.91 lb./ream) (100%) OPP / 6.2 g/m²(3.80 lb./ream) (97.35% PVDC + 2.65 % defoamer) / 11.3 g/m² (6.90 lb./ream) (100% PE2) / 12.6g/m² (7.74 lb./ream) (100% OPET) The total thickness of the first substrate was 35.56 µm (1.4 mil) (35.56 micron) and total thickness of the laminate was 76.2 µm (3.0 mil) (76.2 micron).

### Example 1

A laminate having a first and second substrate with the following structures, layer thicknesses and layer composition were produced:

3.9 g/m² (21 lb./ream) (99% EVA + 1% AB1) // 11.3 g/m² (6.91 lb./ream)(100%) OPP / 6.2 g/m² (3.80 lb./ream) (97.35% PVDC + 2.65% defoamer) / 11.3 g/m² (6.90 lb./ream (100% PE2) / 12.6 g/m² (7.74 lb./ream) (100% OPET)
The total thickness of the first substrate was 35.56 µm (1.4 mil) (35.56 micron) and total thickness of the laminate was about 76.2 µm (3.0 mil) (76.2 micron).

For the following examples, a first substrate was produced by coextruding a first layer of PE1 with and without anti-block particles with a second layer of EAA. A layer of PE2 was coextruded with a second layer of EAA. The second substrate was formed by applying a primer to OPP, followed by lamination of aluminum foil to OPP by an intermediate layer of PE2/EAA. The first substrate was then extrusion coated onto the second substrate to form a laminate.

A single slash, "/", represents the division between individual layers within a substrate, whereas a double slash, "//", represents the division between individual substrates.

### Comparative Example 2

A laminate having a first and second substrate with the following structures, layer thicknesses and layer composition were produced:

25.3 g/m² (15.5 lb./ream) (97.41% (wt.) PE1 + 2.59% (wt.) Slip Additive) / 4.1g/m² (2.50 lb./ream) (100% (wt.) EAA) // 19.6 g/m² (12.00 lb./ream) (100% (wt.) Metal) / 2.4 g/m² (1.50 lb./ream) (100% (wt.) EAA) / 9.8 g/m² (6.01 lb./ream) (87.85% (wt.) PE2 + 11.98% (wt.) Colorant + 0.17% (wt.) primer)/ 11.4 g/m² (7.0 lb./ream) (100% (wt.) OPP)
The total thickness of the first substrate was 30.48 µm (1.2 mil) (30.48 micron) and total thickness of the laminate was 73.66 µm (2.9 mil) (73.66 micron).

### Example 2

A laminate having a first and second substrate with the following structures, layer thicknesses and layer composition were produced:

25.3 g/m² (15.5 lb./ream) (82.44% PE1 (wt.) + 15.0 % AB2 + 2.59% Slip Additive) / 4.1 g/m² (2.50 lb./ream) (100% (wt.) EAA) // (19.6 g/m² (12.00 lb./ream) (100% (wt.) Metal) / 2.9 g/m² (1.50 lb./ream) (100% (wt.) EAA) / 9.8 g/m² (6.01 lb./ream) (87.85% (wt.) PE2 + 11.98% (wt.) Colorant + 0.17% (wt.) primer) / 11.4 g/m² (7.0 lb./ream) (100% (wt.) OPP)
The total thickness of the first substrate was 30.48 µm (1.2 mil) (30.48 micron) and total thickness of the laminate was 73.66 µm (2.9 mil) (73.66 micron).

### Example 3

A laminate having a first and second substrate with the following structures, layer thicknesses and layer composition were produced:

25.3 g/m² (15.5 lb./ream) (89.60% (wt.) PE1 + 7.81 % (wt.) AB2 + 2.59% (wt.) Slip Additive) / 4.1g/m² (2.50 lb./ream) (100% (wt.) EAA) // 19.6 g/m² (12.00 lb./ream) (100% (wt.) Metal) / 2.4 g/m² (1.50 lb./ream) (100% (wt.) EAA) / 9.8 g/m² (6.01 lb./ream) (87.85% (wt.) PE2 + 11.98% (wt.) Colorant + 0.17% (wt.) primer)/ 11.4 g/m² (7.0 lb./ream) (100% (wt.) OPP)
The total thickness of the first substrate was about 30.48 µm (1.2 mil) (30.48 micron) and total thickness of the laminate was about 73.66 µm (2.9 mil) (73.66 micron).

### Example 4

A laminate having a first and second substrate with the following structures, layer thicknesses and layer composition were produced:

25.3 g/m² (15.5 lb./ream) (94.81 % (wt.) PE1 + 2.60% (wt.) AB2 + 2.59% (wt.) Slip Additive) /4.1 g/m² (2.50 lb./ream) (100% (wt.) EAA) //19.6 g/m² (12.00 lb./ream) (100% (wt.) Metal) / 2.4 g/m² (1.50 lb./ream) (100% (wt.) EAA) / 9.8 g/m² (6.01 lb./ream) (87.85% (wt.) PE2 + 11.98% (wt.) Colorant + 0.17% (wt.) primer)/ 11.4 g/m² (7.0 lb./ream) (100% (wt.) OPP)
The total thickness of the first substrate was 30.48 µm (1.2 mil) (30.48 micron) and total thickness of the laminate was 73.66 µm (2.9 mil) (73.66 micron).

Table 1 below summaries the results obtained when using anti-block particles in a laminate structure according to the present invention. These results represent the output during during a form-fill-seal packaging (FFS) operation. Specifically, the output represent the number of packages produced per minute on a High Speed Lane L-18 (WinPack) packaging equipment for a given laminate. The improvement in output (or machinability) is evident when anti-block particles are incorporated into the laminate.

**Table 1**

| Number of packages produced per minute | |
|---|---|
| Comparative Example 2 (no anti-block) | 95-100 |
| Example 3 (7.8% (wt.) anti-block) | 125-145 |

Unless otherwise noted, the physical properties and performance characteristics reported herein were measured by test procedures similar to the following methods.

Density ASTM D-1505

Coefficient of Friction ASTM D-1894

Haze ASTM D-1003

Melt Index ASTM D-1238

Melting Point ASTM D-3417

Particle Size Characterization ASTM D-4464

Tensile Strength ASTM D-882

Unrestrained Linear Thermal Shrinkage ASTM D-2732-96

Vicat Softening Point ASTM D-1525

## Claims

1. A flexible laminate suitable for use in packaging applications comprising:
a) a thermoplastic first substrate having a first exterior surface and an opposing second exterior surface, and a total thickness of A; wherein said thermoplastic first substrate comprises at least a first polymeric layer comprising a heat-sealable resin or blends thereof; and
b) a second substrate comprising at least a first layer;
wherein said thermoplastic first substrate is laminated to said first layer of said second substrate; and
i) said first polymeric layer of said thermoplastic first substrate comprises a plurality of anti-block particles comprising glass spheres and/or ceramic spheres dispersed therein in an amount of between 0.1 and 30% (wt.) relative to the total weight of said first polymeric layer; wherein a portion of said plurality of anti-block particles have a diameter that is at least equal to or greater than said total thickness of said thermoplastic first substrate and are present in an amount such that a portion of said plurality of anti-block particles protrudes from said first exterior surface of said thermoplastic first substrate;
ii) said plurality of anti-block particles have a mean particle diameter B, and a distribution of particle diameters C, such that either B, or at least 10% of C, is at least 31µm (microns) as measured in accordance with ASTM D-4464 test method; and
iii) said total thickness A, said mean particle diameter B, and said at least 10% of said distribution of particle diameters C, are such that the relative values of A, B and C satisfy at least one of the following relationships A/B ≤ 1.0 or A/C ≤ 1.0.

2. A flexible laminate as claimed in claim 1, wherein said thermoplastic first substrate is laminated to said second substrate by an extrusion coating process.

3. A flexible laminate as claimed in claim 1 or claim 2, wherein said first exterior surface of said thermoplastic first substrate is formed by said first polymeric layer of said thermoplastic first substrate.

4. A flexible laminate as claimed in any preceding claim, wherein said second substrate is free of said plurality of anti-block particles having a mean particle diameter equal to or greater than 31 microns as measured in accordance with ASTM D-4464 test method.

5. A flexible laminate as claimed in any preceding claim, wherein said thermoplastic first substrate further comprises a second polymer layer.

6. A flexible laminate as claimed in claim 5, wherein said second polymeric layer of said thermoplastic first substrate is in direct contact with said first layer of said second substrate.

7. A flexible laminate as claimed in any of claims 1 to 5, wherein said first polymeric layer of said thermoplastic first substrate is in direct contact with said first layer of said second substrate.

8. A flexible laminate as claimed in any preceding claim, wherein said heat-sealable resin comprises a material selected from polyolefin-based resins, acrylate-based resins, acrylic acid-based resins, polystyrenes or combinations thereof.

9. A flexible laminate as claimed in claim 8, wherein said polyolefin-based resin comprises a material selected from polyvinylidene chloride (PVDC), ethylene/vinyl alcohol copolymer (E/VOH), polyethylene (PE), polypropylene (PP), polybutylene (PB), ionomer (10), ethylene/α-olefins (E/AO), propylene/α-olefins (P/AO) or blends thereof;

10. A flexible laminate as claimed in claim 8 or claim 9, wherein said acrylate-based resin comprises a material selected from methyl/methacrylate copolymer (M/MA), ethylene/vinyl acrylate copolymer (E/VA), ethylene/methacrylate copolymer (E/MA), ethylene/n-butyl acrylate copolymer (E/nBA) or blends thereof.

11. A flexible laminate as claimed in any of claims 8 to 10, wherein said acrylic acid-based resin comprises a material selected from ethylene/acrylic acid copolymer (E/AA), ethylene/methacrylic acid copolymer (E/MAA) or blends thereof.

12. A flexible laminate as claimed in any preceding claim, wherein said first layer of said second substrate comprises a material selected from paper, metal, ceramic, polyolefin-based resin, polyamide, polyester or combinations thereof.

13. A flexible laminate as claimed in claim 12, wherein said metal comprises a material selected from metallic foils, metallic coatings, metallic oxide coatings or combinations thereof.

14. A flexible laminate as claimed in claim 12 or claim 13, wherein said polyolefin-based resin comprises an oriented polyolefin-based resin.

15. A flexible laminate as claimed in any of claims 12 to 14, wherein said polyamide comprises an oriented polyamide.

16. A flexible laminate as claimed in any of claims 12 to 15, wherein said polyester comprises an oriented polyester.

17. A flexible laminate as claimed in any preceding claim, wherein said second substrate further comprises a polymeric second layer, a polymeric third layer and a polymeric fourth layer.

18. A flexible laminate as claimed in claim 17, wherein said polymeric second layer comprises a material selected from a polyolefin-based resin, an acrylate-based resin, an acrylic acid-based resin or combinations thereof.

19. A flexible laminate as claimed in claim 17 or claim 18, wherein said polymeric third layer comprises a material selected from a polyolefin-based resin, an acrylate-based resin, an acrylic acid-based resin or combinations thereof.

20. A flexible laminate as claimed in any of claims 17 to 19, wherein said polymeric fourth layer comprises a material selected from paper, polyolefin-based resin, acrylate-based resin, acrylic acid-based resin, polyamide, a polyester or combinations thereof.

21. A flexible laminate as claimed in any preceding claim, wherein said thermoplastic first substrate has a haze value of less than 50 as measured in accordance with ASTM D-1003 test method.

22. A flexible laminate as claimed in any preceding claim, wherein said laminate has a coefficient of friction of between 0.05-0.6 as measured in accordance with ASTM D-1894 test method.

23. A flexible laminate as claimed in claim 22, wherein said laminate has a coefficient of friction of between 0.1-0.4 as measured in accordance with ASTM D-1894 test method.

24. A flexible laminate as claimed in any preceding claim, wherein said plurality of anti-block particles are present in said first polymeric layer of said thermoplastic first substrate in an amount of between 0.1-10% (wt.) relative to the total weight of said first polymeric layer of said thermoplastic first substrate.

## Patentansprüche

1. Flexibles Laminat zur Verwendung in Verpackungsanwendungen, umfassend:
a) ein thermoplastisches erstes Substrat mit einer ersten äußeren Oberfläche und einer gegenüberliegenden zweiten äußeren Oberfläche und einer Gesamtdicke A, wobei das thermoplastische erste Substrat mindestens eine erste Polymerschicht mit einem wärmeverschweißbarem Harz oder Mischungen hiervon umfaßt; und
b) ein zweites Substrat mit mindestens einer ersten Schicht, wobei das thermoplastische erste Substrat auf die erste Schicht des zweiten Substrats laminiert ist; und
i) wobei die erste Polymerschicht des thermoplastischen ersten Substrats eine Vielzahl von Antiblockpartikeln (Antihaftpartikeln) aufweist, welche 0,1 bis 30 Gew.-%, bezogen auf das Gesamtgewicht der ersten Polymerschicht, an hierin dispergierten Glaskugeln und/oder keramischen Kugeln umfassen, wobei ein Teil der Vielzahl der Antiblockpartikel einen Durchmesser aufweist, der mindestens gleich wie oder größer als die Gesamtdicke des thermoplastischen ersten Substrats ist, und in einer solchen Menge vorhanden ist, daß ein Teil der Vielzahl der Antiblockpartikel von der ersten äußeren Oberfläche des thermoplastischen ersten Substrats hervortritt;
ii) wobei die Vielzahl der Antiblockpartikel einen mittleren Durchmesser B und eine Verteilung der Durchmesser C aufweist, so daß entweder B oder mindestens 10 % von C mindestens 31 µm (Mikron) beträgt, bestimmt nach der Testmethode gemäß ASTM D-4464; und
iii) wobei die Gesamtdicke A, der mittlere Partikeldurchmesser B und mindestens 10 % der Verteilung der Partikeldurchmesser C derart sind, daß die relativen Werte von A, B und C mindestens eine der folgenden Beziehungen erfüllen: A/B ≤ 1,0 oder A/C ≤1,0.

2. Flexibles Laminat nach Anspruch 1, wobei das thermoplastische erste Substrat mittels eines Extrusionsbeschichtungsverfahrens auf das zweite Substrat laminiert ist.

3. Flexibles Laminat nach Anspruch 1 oder 2, wobei die erste äußere Oberfläche des thermoplastischen ersten Substrats durch die erste Polymerschicht des thermoplastischen ersten Substrats gebildet ist.

4. Flexibles Laminat nach einem der vorangehenden Ansprüche, wobei das zweite Substrat frei ist von einer Vielzahl von Antiblockpartikeln mit einem mittleren Durchmesser gleich wie oder größer als 31 Mikron, bestimmt nach der Testmethode gemäß ASTM D-4464.

5. Flexibles Laminat nach einem der vorangehenden Ansprüche, wobei das thermoplastische erste Substrat außerdem eine zweite Polymerschicht umfaßt.

6. Flexibles Laminat nach Anspruch 5, wobei die zweite Polymerschicht des thermoplastischen ersten Substrats in direktem Kontakt zu der ersten Schicht des zweiten Substrats steht.

7. Flexibles Laminat nach einem der Ansprüche 1 bis 5, wobei die erste Polymerschicht des thermoplastischen ersten Substrats in direktem Kontakt zu der ersten Schicht des zweiten Substrats steht.

8. Flexibles Laminat nach einem der vorangehenden Ansprüche, wobei das wärmeverschweißbare Harz ein Material umfaßt, welches ausgewählt aus polyolefinbasierten Harzen, acrylatbasierten Harzen, acrylsäurebasierten Harzen, Polystyrolen und deren Kombinationen.

9. Flexibles Laminat nach Anspruch 8, wobei das polyolefinbasierte Harz ein Material umfaßt, welches ausgewählt aus Polyvinylidenchlorid (PVDC), EthylenlVinylalkohol-Copolyner (EIVOH), Polyethylen (PE), Polypropylen (PP), Polybutylen (PB), Ionomer (10), Ethylen/α-Olefinen (E/AO), Propylen/α-Olefinen (P/AO) oder deren Mischungen.

10. Flexibles Laminat nach Anspruch 8 oder 9, wobei das acrylatbasierte Harz ein Material umfaßt, welches ausgewählt ist aus Methyl/Methacrylat-Copolymer (M/MA), Ethylen/Vinylacrylat-Copolymer (E/VA), Ethylen/Methacrylat-Copolymer (E/MA), Ethylen/n-Butylacrylat-Copolymer (E/n-BA) oder deren Mischungen.

11. Flexibles Laminat nach einem der Ansprüche 8 bis 10, wobei das acrylsäurebasierte Harz ein Material umfaßt, welches ausgewählt ist aus Ethylen/Acrylsäure-Copolymer (E/AA), Ethylen/Methacrylsäure-Copolymer (E/MAA) oder deren Mischungen.

12. Flexibles Laminat nach einer der vorangehenden Ansprüche, wobei die erste Schicht des zweiten Substrats ein Material umfaßt, welches ausgewählt ist aus Papier, Metall, Keramik, polyolefinbasiertem Harz, Polyamid, Polyester oder deren Kombinationen.

13. Flexibles Laminat nach Anspruch 12, wobei das Metall ein Material umfaßt, welches ausgewählt ist aus Metallfolien, Metallbeschichtungen, Metalloxidbeschichtungen oder deren Kombinationen.

14. Flexibles Laminat nach Anspruch 12 oder 13, wobei das polyolefinbasierte Harz ein orientiertes polyolefinbasiertes Harz umfaßt.

15. Flexibles Laminat nach einem der Ansprüche 12 bis 14, wobei das Polyamid ein orientiertes Polyamid umfaßt.

16. Flexibles Laminat nach einem der Ansprüche 12 bis 15, wobei der Polyester einen orientierten Polyester umfaßt.

17. Flexibles Laminat nach einem der vorangehenden Ansprüche, wobei das zweite Substrat außerdem eine polymere zweite Schicht, eine polymere dritte Schicht und eine polymere vierte Schicht umfaßt.

18. Flexibles Laminat nach Anspruch 17, wobei die polymere zweite Schicht ein Material umfaßt, welches ausgewählt ist aus polyolefinbasiertem Harz, acrylatbasiertem Harz, acrylsäurebasiertem Harz oder deren Kombinationen.

19. Flexibles Laminat nach Anspruch 17 oder 18, wobei die polymere dritte Schicht ein Material umfaßt, welches ausgewählt ist aus polyolefinbasiertem Harz, acrylatbasiertem Harz, acrylsäurebasiertem Harz oder deren Kombinationen.

20. Flexibles Laminat nach einem der Ansprüche 17 bis 19, wobei die polymere vierte Schicht ein Material umfaßt, welches ausgewählt ist aus Papier, polyolefinbasiertem Harz, acrylatbasiertem Harz, acrylsäurebasiertem Harz, Polyamid, einem Polyester oder deren Kombinationen.

21. Flexibles Laminat nach einem der vorangehenden Ansprüche, wobei das thermoplastische erste Substrat einen Trübungswert von weniger als 50 aufweist, bestimmt nach der Testmethode gemäß ASTM D-1003.

22. Flexibles Laminat nach einem der vorangehenden Ansprüche, wobei das Laminat einen Reibungskoeffizienten von 0,05-0,6 aufweist, bestimmt nach der Testmethode gemäß ASTM D-1894.

23. Flexibles Laminat nach Anspruch 22, wobei das Laminat einen Reibungskoeffizienten von 0,1-0,4 aufweist, bestimmt nach der Testmethode gemäß ASTM D-1894.

24. Flexibles Laminat nach einem der vorangehenden Ansprüche, wobei die Vielzahl von Antiblockpartikeln in der ersten Polymerschicht des thermoplastischen ersten Substrats in einer Menge von 0,1-10 Gew.-%, bezogen auf das Gesamtgewicht der ersten Polymerschicht des thermoplastischen ersten Substrats, vorhanden ist.

## Revendications

1. Stratifié flexible adapté pour une utilisation dans des applications d'emballage, comprenant :
a) un premier substrat thermoplastique ayant une première surface extérieure et une seconde surface extérieure opposée, et une épaisseur totale de A ; dans lequel ledit premier substrat thermoplastique comprend au moins une première couche de polymère comprenant une résine thermo-soudable ou des mélanges de celles-ci ; et
b) un second substrat comprenant au moins une première couche ;
dans lequel ledit premier substrat thermoplastique est stratifié sur ladite première couche dudit second substrat ; et
i) ladite première couche polymère dudit premier substrat thermoplastique comprend une pluralité de particules antiblocage comprenant des billes de verre et/ou des billes en céramique dispersées à l'intérieur, dans une quantité comprise entre 0,1 et 30 % (en poids) relativement au poids total de ladite première couche polymère ; dans laquelle une portion de ladite pluralité de particules antiblocage a un diamètre qui est au moins égal ou supérieur à ladite épaisseur totale dudit premier substrat thermoplastique et est présente dans une quantité telle qu'une portion desdites particules antiblocage ressort de ladite première surface extérieure dudit premier substrat thermoplastique ;
ii) ladite pluralité de particules antiblocage a un diamètre moyen de particules B, et une répartition de diamètres de particule C, de sorte que soit B, soit au moins 10 % de C, soit au moins égal à 31 µm (microns), comme mesuré selon le procédé de test de la norme ASTM D-4464 et
iii) ladite épaisseur totale A, ledit diamètre moyen de particule B et lesdits au moins 10 % de ladite répartition des diamètres de particules C, sont tels que les valeurs relatives de A, B et C satisfont au moins l'une des relations suivantes A/B ≤1,0 ou A/C ≤ 1,0 ;

2. Stratifié flexible selon la revendication 1, dans lequel ledit premier substrat thermoplastique est stratifié sur ledit second substrat par un procédé de revêtement par extrusion.

3. Stratifié flexible selon la revendication 1 ou 2, dans lequel ladite première surface extérieure dudit premier substrat thermoplastique est formée par ladite première couche polymère dudit premier substrat thermoplastique.

4. Stratifié flexible selon l'une quelconque des revendications précédentes, dans lequel ledit second substrat est dénué de ladite pluralité de particules antiblocage, ayant un diamètre moyen de particules égal ou supérieur à 31 microns, comme mesuré selon le procédé de test de la norme ASTM D-4464.

5. Stratifié flexible selon l'une quelconque des revendications précédentes, dans lequel ledit premier substrat thermoplastique comprend en outre une seconde couche polymère.

6. Stratifié flexible selon la revendication 5, dans lequel ladite seconde couche polymère dudit premier substrat thermoplastique est en contact direct avec ladite première couche dudit second substrat.

7. Stratifié flexible selon l'une quelconque des revendications 1 à 5, dans lequel ladite première couche polymère dudit premier substrat thermoplastique est en contact direct avec ladite première couche dudit second substrat.

8. Stratifié flexible selon l'une quelconque des revendications précédentes, dans lequel ladite résine thermo-soudable comprend un matériau choisi parmi des résines à base de polyoléfine, des résines à base d'acrylate, des résines à base d'acide acrylique, des polystyrènes ou des combinaisons de ceux-ci.

9. Stratifié flexible selon la revendication 8, dans lequel ladite résine à base de polyoléfine comprend un matériau choisi parmi le chlorure de polyvinylidène (PVDC), le copolymère éthylène/alcool de vinyle (E/VOH), le polyéthylène (PE), le polypropylène (PP), le polybutylène (PB), l'ionomère (IO), l'éthylène/α-oléfines (E/AO), le propylène /α-oléfines (P/AO), ou des mélanges de ceux-ci ;

10. Stratifié flexible selon la revendication 8 ou 9, dans lequel ladite résine à base d'acrylate comprend un matériau choisi parmi le copolymère méthyle/méthacrylate (M/MA), le copolymère éthylène/acrylate de vinyle (E/VA), le copolymère éthylène/méthacrylate (E/MA), le copolymère éthylène/n-butyl-acrylate (E/nBA) ou des mélanges de ceux-ci.

11. Stratifié flexible selon l'une quelconque des revendications 8 à 10, dans lequel ladite résine à base d'acide acrylique comprend un matériau choisi parmi le copolymère éthylène/acide acrylique (E/AA), le copolymère éthylène/acide méthacrylique (E/MAA) ou des mélanges de ceux-ci.

12. Stratifié flexible selon l'une quelconque des revendications précédentes, dans lequel ladite première couche dudit second substrat comprend un matériau choisi à partir de papier, métal, céramique, résine à base de polyoléfine, polyamide, polyester ou des combinaisons de ceux-ci.

13. Stratifié flexible selon la revendication 12, dans lequel ledit métal comprend un matériau choisi à partir de feuilles métalliques, de revêtements métalliques, de revêtements d'oxyde métallique ou de combinaisons de ceux-ci.

14. Stratifié flexible selon la revendication 12 ou 13, dans lequel ladite résine à base de polyoléfine comprend une résine à base de polyoléfine orientée.

15. Stratifié flexible selon l'une quelconque des revendications 12 à 14, dans lequel ledit polyamide comprend un polyamide orienté.

16. Stratifié flexible selon l'une quelconque des revendications 12 à 15, dans lequel ledit polyester comprend un polyester orienté.

17. Stratifié flexible selon l'une quelconque des revendications précédentes, dans lequel ledit second substrat comprend en outre une seconde couche de polymère, une troisième couche de polymère et une quatrième couche de polymère.

18. Stratifié flexible selon la revendication 17, dans lequel ladite seconde couche de polymère comprend un matériau choisi parmi une résine à base de polyoléfine, une résine à base d'acrylate, une résine à base d'acide acrylique, ou des combinaisons de celles-ci.

19. Stratifié flexible selon la revendication 17 ou 18, dans lequel ladite troisième couche polymère comprend un matériau choisi parmi une résine à base de polyoléfine, une résine à base d'acrylate, une résine à base d'acide acrylique ou des combinaisons de celles-ci.

20. Stratifié flexible selon l'une quelconque des revendications 17 à 19, dans lequel ladite quatrième couche de polymère comprend un matériau choisi parmi le papier, la résine à base de polyoléfine, la résine à base d'acrylate, la résine à base d'acide acrylique, le polyamide, un polyester ou des combinaisons de ceux-ci.

21. Stratifié flexible selon l'une quelconque des revendications précédentes, dans lequel ledit premier substrat thermoplastique a une valeur de turbidité inférieure à 50, comme mesuré selon le procédé de test ASTM D-1003.

22. Stratifié flexible selon l'une quelconque des revendications précédentes, dans lequel ledit stratifié a un coefficient de frottement compris entre 0,05 et 0,6, comme mesuré selon le procédé de test ASTM D-1894.

23. Stratifié flexible selon la revendication 22, dans lequel ledit stratifié a un coefficient de frottement compris entre 0,1 et 0,4, comme mesuré selon le procédé de test ASTM D-1894.

24. Stratifié flexible selon l'une quelconque des revendications précédentes, dans lequel ladite pluralité de particules antiblocage est présente dans ladite première couche de polymère dudit premier substrat thermoplastique, dans une quantité comprise entre 0,1 et 10 % (en poids), relativement au poids total de ladite première couche polymère dudit premier substrat thermoplastique.
